# FASCICULE DE BREVET EUROPEEN

(11) **EP 4 555 230 B1**
(45) Date de publication et mention de la délivrance du brevet: **21.10.2026**
(21) Numéro de dépôt: 23736378.3
(22) Date de dépôt: 03.07.2023
(51) Int. Cl.: F16H 3/74, F16H 61/02, F16H 3/54, F02C 7/06, F02C 7/32, F02C 3/113, F02C 7/36, F16H 59/46, F16H 63/30, F16H 59/68

(54) **BOÎTIER DE RELAIS D'ACCESSOIRES POUR UNE TURBOMACHINE D'AÉRONEF ET PROCÉDÉ D'UTILISATION**
HILFSGETRIEBE FÜR EIN FLUGZEUGTURBINENTRIEBWERK UND VERFAHREN ZUR VERWENDUNG
ACCESSORY GEARBOX FOR AN AIRCRAFT TURBINE ENGINE AND METHOD OF USE

(30) Priorité: 13.07.2022 FR 2207212
(43) Date de publication de la demande: 21.05.2025
(73) Titulaire: SAFRAN AIRCRAFT ENGINES, 75015 Paris (FR)
(72) Inventeur: ZSIGA, Zoltan, 77550 MOISSY-CRAMAYEL (FR); CHATENET, Luc Henri, 77550 MOISSY-CRAMAYEL (FR)
(74) Mandataire: Argyma
(86) Numéro de dépôt international: PCT/EP2023/068195
(87) Numéro de publication internationale: WO 2024/012909

(56) Documents cités:
- CN-A- 106 438 880
- US-A1- 2021 102 499
- US-A1- 2022 010 733
- US-B1- 11 364 797

## Description

### DOMAINE TECHNIQUE

La présente invention concerne un boîtier de relais d'accessoires pour une turbomachine d'aéronef, en particulier, un système de changement de vitesse pour un tel boîtier et son procédé d'utilisation.

De manière connue, une turbomachine d'aéronef assure la propulsion d'un aéronef à partir de l'accélération d'un flux d'air circulant dans la turbomachine au travers notamment d'un (ou plusieurs) compresseur(s), d'une chambre de combustion et d'une (ou plusieurs) turbine(s). La turbine est couplée au compresseur par au moins un arbre de turbomachine.

De manière connue, une turbomachine d'aéronef comprend un boîtier de relais d'accessoires, connu de l'homme du métier sous la dénomination anglaise « Accessory Gear Box » d'acronyme AGB. Le boîtier de relais d'accessoires comprend au moins une entrée couplée à plusieurs lignes d'arbres parallèles. L'entrée est configurée pour recevoir un couple d'entraînement d'un arbre de turbomachine, en particulier, au moyen d'un bras radial et d'un renvoi d'angle. En fonctionnement, le couple reçu par l'entrée est transmis à chaque ligne d'arbres. Un ou plusieurs équipements d'aéronef en série sont montés sur chaque ligne d'arbres, tels qu'un groupe de lubrification, une pompe à carburant, un générateur électrique, un démarreur et un déshuileur par exemple.

De manière connue, un groupe de lubrification (GDL) est alimenté par un réservoir de fluide de lubrification. Le groupe de lubrification comprend typiquement plusieurs pompes, dont au moins une pompe d'alimentation dimensionnée pour alimenter les différents circuits de la turbomachine d'aéronef en fluide de lubrification à un débit et une pression adaptés en fonction du régime de la turbomachine. L'entraînement de la pompe est classiquement assuré par une ligne d'arbres ayant un rapport de réduction constant, de sorte que la vitesse d'entraînement soit proportionnelle à la vitesse de l'arbre de turbomachine.

En pratique, lors d'un régime sous-ralenti de la turbomachine d'aéronef, le débit et la pression de fluide de lubrification fournis par le groupe de lubrification s'avèrent insuffisants. La vitesse de l'arbre de turbomachine est en effet trop faible pour assurer un entraînement suffisant de certains circuits de la pompe, ce qui peut conduire à un endommagement de la turbomachine, par grippage notamment. Le régime sous-ralenti s'observe par exemple lors du démarrage de la turbomachine d'aéronef, ou lorsque la soufflante ou l'hélice de la turbomachine est en moulinet (« windmilling » en anglais) c'est-à-dire en autorotation, ou encore lors d'une maintenance, telle que le lavage de la soufflante.

Une solution serait d'augmenter le dimensionnement de la pompe. Cela augmenterait toutefois de manière indésirable la complexité et l'encombrement du groupe de lubrification dans le boîtier de relais d'accessoires. En particulier, il est difficile de dimensionner une pompe pour fournir un débit significatif à très basse vitesse.

Il est connu par US2022010733A1 de prélever un couple sur une turbomachine d'aéronef pour entraîner un arbre de sortie au moyen d'un train épicycloïdal, d'un embrayage et d'un frein. Au-dessus d'un seuil de pression d'huile fournie par une pompe entraînée par la turbomachine, le frein est actionné pour bloquer la couronne du train épicycloïdal et augmenter la vitesse de l'arbre de sortie. Un tel dispositif ne vise pas à contrôler la lubrification, et quand bien même il serait détourné à cette utilisation, aboutirait à réduire la lubrification à faible régime.

Il est également connu par US2021102499A1 un système d'entraînement d'un boîtier d'accessoires pouvant être couplé à la fois à l'arbre basse pression et l'arbre haute pression. CN106438880A et US11364797B1 enseignent quant à eux un système de transmission à plusieurs vitesses pour un véhicule.

L'invention vise ainsi à éliminer au moins certains de ces inconvénients.

### PRESENTATION DE L'INVENTION

L'invention concerne un boîtier de relais d'accessoires pour une turbomachine d'aéronef selon la revendication 1.

Le système de changement de vitesse permet avantageusement d'entraîner un arbre de sortie selon deux rapports de transmission constants différents par rapport à un arbre d'entrée. Le système de changement de vitesse comporte en outre un encombrement restreint grâce au train d'engrenages épicycloïdal, ce qui le rend facilement intégrable dans un boîtier de relais d'accessoires de turbomachine d'aéronef. L'invention permet ainsi de prévoir plusieurs régimes d'entraînement différents pour un équipement d'aéronef monté dans un boîtier de relais d'accessoires, sans augmentation significative de l'encombrement.

Selon un aspect de l'invention, le dispositif d'embrayage est configuré pour désaccoupler de manière automatique l'arbre d'entrée et l'arbre de sortie, lorsque la vitesse de rotation de l'arbre de sortie est supérieure à la vitesse de rotation de l'arbre d'entrée. Aucun pilotage du dispositif d'embrayage n'est avantageusement nécessaire, que ce soit par commande numérique ou intervention humaine. Ceci permet de passer de manière simple, pratique et immédiate de la position débrayée à la position embrayée et inversement. Ainsi, la commande du dispositif de blocage permet de commander directement le dispositif d'embrayage.

Selon un aspect de l'invention, le dispositif d'embrayage se présente sous la forme d'une roue libre, de préférence de type survireur. Un tel dispositif d'embrayage est simple et peu coûteux.

Selon un aspect de l'invention, le dispositif de blocage coopère, dans la position de connexion, avec la couronne par liaison crabot. Ceci assure un blocage mécanique efficace, de manière simple et pratique.

La force de rappel du ressort et la pression du fluide de lubrification permettent ensemble de déplacer le piston entre la position de connexion et la position de déconnexion de manière automatique et efficace.

Aucun pilotage du dispositif de blocage n'est avantageusement nécessaire, que ce soit par commande numérique ou intervention humaine. Ceci permet de passer de manière simple, pratique et immédiate de la position de connexion à la position de connexion et inversement. Le déplacement automatique du dispositif d'embrayage et du dispositif de blocage permettent en synergie une utilisation entièrement automatisée du système de changement de vitesse. L'invention permet avantageusement une montée en pression et en débit plus rapide du circuit de lubrification.

Selon un aspect de l'invention, le dispositif de blocage est configuré pour être déplacé automatiquement de la position de déconnexion à la position de connexion lorsque la pression de fluide de lubrification est inférieure à un deuxième seuil prédéterminé, de préférence inférieur au premier seuil. Le passage entre la première configuration et la deuxième configuration du système de changement de vitesse est ainsi mis en œuvre de manière rapide, grâce à une hystérésis.

L'invention permet ainsi de prévoir plusieurs régimes d'entraînement différents pour un équipement d'aéronef sous la forme d'un groupe de lubrification monté dans un boîtier de relais d'accessoires, en particulier en fonction du régime de la turbomachine d'aéronef. Cela permet d'assurer une lubrification suffisante de la turbomachine d'aéronef à faible régime, pour éviter un risque d'usure par grippage notamment comme dans l'art antérieur.

Il est également décrit une turbomachine d'aéronef comprenant un boîtier de relais d'accessoires tel que décrit précédemment.

L'invention concerne également un procédé d'utilisation du système de changement de vitesse tel que décrit précédemment, dans lequel le système de changement de vitesse est initialement dans la première configuration, dans laquelle le dispositif d'embrayage est dans la position embrayée et le dispositif de blocage est dans la position de déconnexion, le procédé d'utilisation comprenant :
- Une étape de déplacement du dispositif de blocage dans la position de connexion et
- Une étape de déplacement du dispositif d'embrayage dans la position débrayée, de manière à ce que le système de changement de vitesse soit dans la deuxième configuration.

Il est également décrit un procédé d'utilisation du système de changement de vitesse tel que décrit précédemment, dans lequel le système de changement de vitesse est initialement dans la deuxième configuration, dans laquelle le dispositif d'embrayage est dans la position débrayée et le dispositif de blocage est dans la position de connexion, le procédé d'utilisation comprenant :
- Une étape de déplacement du dispositif de blocage dans la position de déconnexion,
   et
- Une étape de déplacement du dispositif d'embrayage dans la position embrayée, de manière à ce que le système de changement de vitesse soit dans la première configuration.

Il est également décrit que l'étape de déplacement du dispositif de blocage est mise en oeuvre avant l'étape de déplacement du dispositif d'embrayage. De préférence, l'étape de déplacement du dispositif d'embrayage est réalisée de manière automatique suite à l'étape de déplacement du dispositif de blocage. De manière avantageuse, la mise en oeuvre de l'étape de déplacement du dispositif de blocage permet de modifier le différentiel de vitesse entre l'arbre d'entrée et l'arbre de sortie, ce qui permet d'entraîner automatiquement la mise en oeuvre de l'étape de déplacement du dispositif d'embrayage.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique en coupe longitudinale d'une turbomachine d'aéronef comprenant un boîtier de relais d'accessoires selon une forme de réalisation de l'invention.
La figure 2 est une représentation schématique d'un boîtier de relais d'accessoires avec un système de changement de vitesse dans la première configuration selon une forme de réalisation de l'invention.
La figure 3 est une représentation schématique d'un boîtier de relais d'accessoires avec un système de changement de vitesse dans la deuxième configuration selon une forme de réalisation de l'invention.
La figure 4 est une représentation schématique du dispositif de blocage de la couronne du système de changement de vitesse de la figure 2 dans la position de déconnexion.
La figure 5 est une représentation schématique du dispositif de blocage de la couronne du système de changement de vitesse de la figure 3 dans la position de connexion.
La figure 6 est une représentation schématique de l'évolution de la vitesse de l'arbre de sortie en fonction de la pression du fluide de lubrification du groupe de lubrification du boîtier de relais d'accessoires des figures 2 et 3.
La figure 7 est une représentation schématique du procédé d'utilisation du système de changement de vitesse lors du déplacement dans la deuxième configuration selon un mode de réalisation de l'invention.

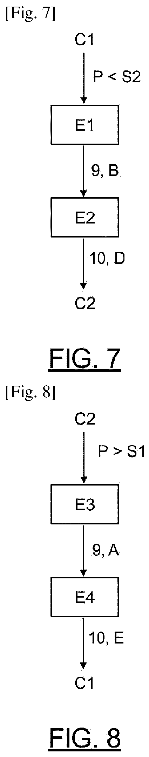

La figure 7 est une représentation schématique du procédé d'utilisation du système de changement de vitesse lors du déplacement dans la deuxième configuration selon un mode de réalisation de l'invention.
La figure 8 est une représentation schématique du procédé d'utilisation du système de changement de vitesse lors du déplacement dans la première configuration selon un mode de réalisation de l'invention.

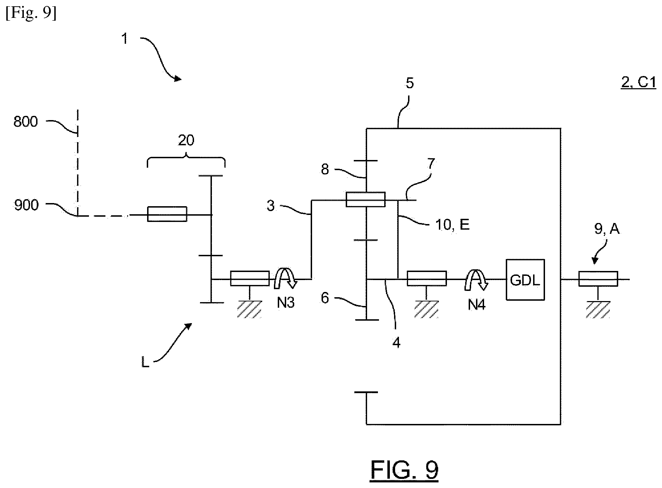

La figure 9 est une représentation schématique d'un boîtier de relais d'accessoires avec un système de changement de vitesse dans la première configuration selon une autre forme de réalisation de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

La présente invention concerne un boîtier de relais d'accessoires pour une turbomachine d'aéronef, en particulier, un système de changement de vitesse pour un tel boîtier et son procédé d'utilisation.

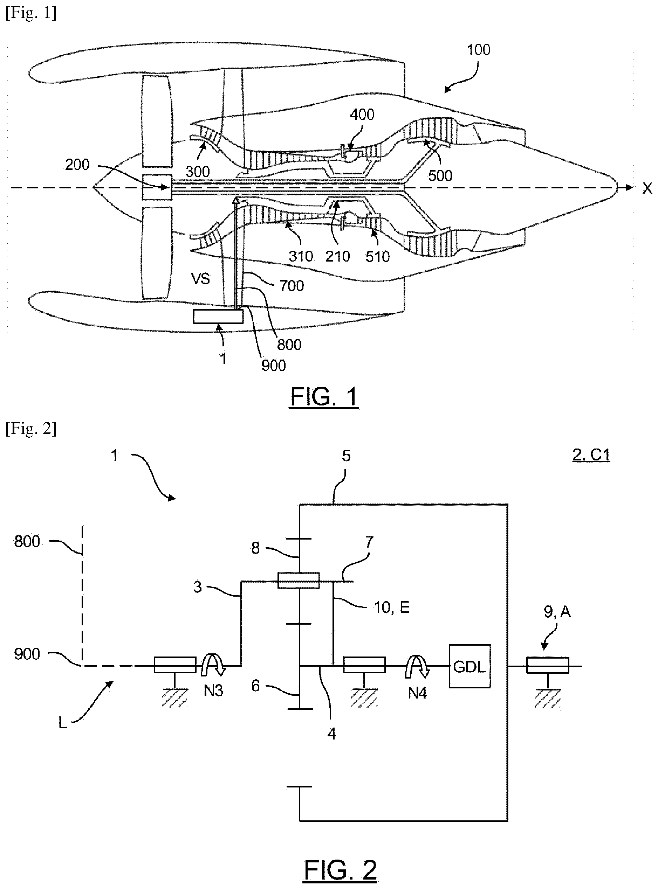

Comme illustré sur la figure 1, une turbomachine d'aéronef 100, dans cet exemple de type à double flux s'étendant selon un axe longitudinal X, assure la propulsion d'un aéronef à partir de l'accélération d'un flux d'air circulant dans la turbomachine 100 au travers notamment d'un (ou plusieurs) compresseur(s) 300, 310, d'une chambre de combustion 400 et d'une (ou plusieurs) turbine(s) 500, 510. La turbine 500, 510 est couplée au compresseur 300, 310 par au moins un arbre de turbomachine 200, 210.

Comme illustré sur la figure 1, une turbomachine d'aéronef 100 comprend un boîtier de relais d'accessoires 1, connu de l'homme du métier sous la dénomination anglaise « Accessory Gear Box » d'abréviation AGB. Le boîtier de relais d'accessoires 1 s'étend classiquement extérieurement au(x) compresseur(s) 300, 310 par rapport à l'axe longitudinal X, dans cet exemple, extérieurement à la veine secondaire VS.

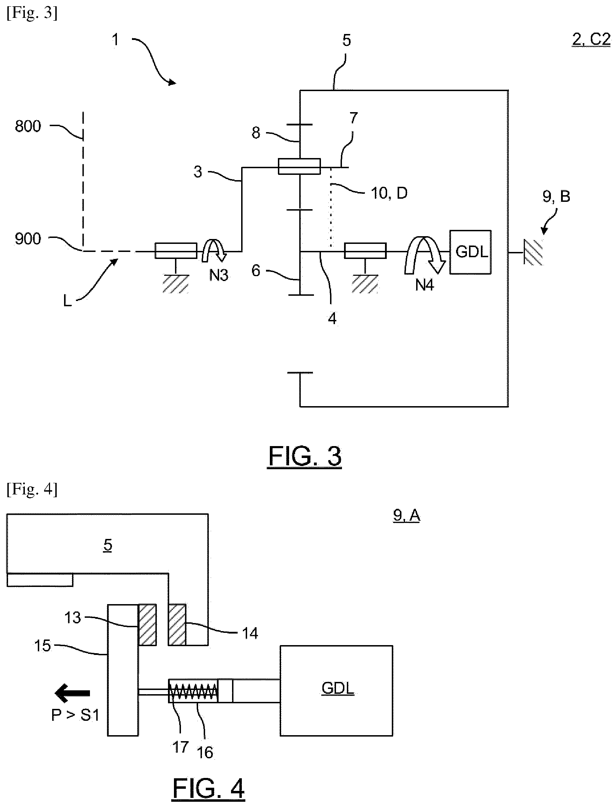

En référence à la figure 1, le boîtier de relais d'accessoires 1 comprend au moins une entrée couplée à plusieurs lignes d'arbres parallèles (une ligne d'arbres L est représentée sur les figures 2 et 3). L'entrée est configurée pour recevoir un couple d'entraînement d'un arbre de turbomachine 200, 210, en particulier, au moyen d'un bras radial 800 et d'un renvoi d'angle 900. Dans cet exemple, le bras radial 800 s'étend dans un organe de guidage, connu sous le terme « Outlet Guide Vane » d'abréviation OGV, s'étendant radialement dans la veine secondaire VS. En fonctionnement, le couple reçu par l'entrée est transmis à chaque ligne d'arbres. Un ou plusieurs équipements d'aéronef en série sont montés sur chaque ligne d'arbres, tels qu'un groupe de lubrification, une pompe à carburant, un générateur électrique, un démarreur et un déshuileur par exemple.

Les figures 2 et 3 représentent une ligne d'arbres L du boîtier de relais d'accessoires 1, sur laquelle est monté un groupe de lubrification GDL. Le groupe de lubrification GDL est alimenté par un réservoir de fluide de lubrification (non représenté). Le groupe de lubrification GDL comprend plusieurs pompes, dont au moins une pompe d'alimentation (non représentée) dimensionnée pour alimenter les différents circuits de la turbomachine d'aéronef en fluide de lubrification à un débit et une pression adaptés en fonction du régime de la turbomachine 100. La pompe est entraînée à partir du couple de l'arbre de turbomachine 200, 210 transmis par le bras radial 800 et le renvoi d'angle 900.

En référence aux figures 2 et 3, l'invention concerne un système de changement de vitesse 2 pour l'entraînement d'un ou plusieurs équipements, tel que le groupe de lubrification GDL, par un boîtier de relais d'accessoires 1. Le système de changement de vitesse 2 comprend :
- Un arbre d'entrée 3 et un arbre de sortie 4 configuré pour être entraîné en rotation par l'arbre d'entrée 3,
- Un train d'engrenages épicycloïdal comprenant une couronne 5 montée libre en rotation, un planétaire 6 solidaire de l'arbre de sortie 4, et un porte-satellite 7 solidaire de l'arbre d'entrée 3 et comprenant un ou plusieurs satellites 8,
- Un dispositif d'embrayage 10 configuré, dans une position embrayée E, pour coupler l'arbre d'entrée 3 et l'arbre de sortie 4, et dans une position débrayée D, pour découpler l'arbre d'entrée 3 et l'arbre de sortie 4, et
- Un dispositif de blocage 9 configuré, dans une position de connexion B, pour interdire la rotation de la couronne 5, et dans une position de déconnexion A, pour autoriser la rotation de la couronne 5.

Toujours selon l'invention, le système de changement de vitesse 2 comprend :
- Une première configuration C1 illustrée sur la figure 2, dans laquelle le dispositif d'embrayage 10 est dans la position embrayée E et le dispositif de blocage 9 est dans la position de déconnexion A, de manière à entraîner l'arbre de sortie 4 à une vitesse N4 égale à la vitesse N3 de l'arbre d'entrée 3, et
- Une deuxième configuration C2 illustrée sur la figure 3, dans laquelle le dispositif d'embrayage 10 est dans la position débrayée D et le dispositif de blocage 9 est dans la position de connexion B, de manière à entraîner l'arbre de sortie 4 à une vitesse N4 supérieure à la vitesse N3 de l'arbre d'entrée 3.

Le système de changement de vitesse 2 permet d'entraîner un arbre de sortie 4 à partir de la rotation d'un arbre d'entrée 3 selon deux rapports de réduction constants différents, à savoir un premier rapport de transmission R1 vérifiant R1 = N4 / N3 = 1 dans la première configuration C1 et un deuxième rapport de transmission R2 vérifiant la relation R2 > R1 dans la deuxième configuration C2. De préférence, le deuxième rapport de transmission R2 vérifie R2 = N4 / N3 et R2 > 3. Le système de changement de vitesse 2 présente de plus un encombrement restreint du fait du train d'engrenages épicycloïdal.

Dans l'exemple des figures 2 et 3 illustrant une forme de réalisation préférée de l'invention, le système de changement de vitesse 2 est intégré au boîtier de relais d'accessoires 1 et est monté sur la ligne d'arbres L du groupe de lubrification GDL. Le groupe de lubrification GDL est monté sur l'arbre de sortie 4, correspondant à la sortie du train épicycloïdal. L'arbre d'entrée 3, correspondant à l'entrée du train épicycloïdal, est couplé à l'entrée du boîtier de relais d'accessoires 1 et reçoit le couple de l'arbre de turbomachine 200, 210 (figure 1).

Selon un aspect préféré illustré sur la figure 9, le système de changement de vitesse 2 comprend également un train d'engrenages simple 20, muni de deux pignons de diamètres différents, afin de modifier la vitesse reçue par le groupe de lubrification GDL selon un rapport de transmission R constant, vérifiant de préférence R > 1 et préférentiellement R < 2. Le train d'engrenages simple 20 est par exemple monté entre l'entrée du boîtier de relais d'accessoires 1 et l'arbre d'entrée 3 du train épicycloïdal (voir figure 9), ou entre l'arbre de sortie 4 du train épicycloïdal et le groupe de lubrification GDL. Le rapport de transmission total Rtot entre le groupe de lubrification GDL et l'entrée du boîtier de relais d'accessoires 1 vérifie ainsi Rtot = R*R1 = R dans la première configuration C1, et Rtot = R*R2 > R*R1 dans la deuxième configuration C2.

Il va de soi que le système de changement de vitesse 2 pourrait être monté sur une ligne d'arbres quelconque du boîtier de relais d'accessoires 1, autre que celle du groupe de lubrification GDL, pour pouvoir entraîner un ou plusieurs autres équipements d'aéronef selon deux rapports de transmission différents. Le système de changement de vitesse 2 permet avantageusement, dans le cas d'une ligne d'arbres avec plusieurs équipements, le changement de vitesse simultané de tous les équipements. De plus, selon un autre aspect de l'invention, le système de changement de vitesse 2 pourrait être intégré à un équipement d'aéronef et non au boîtier de relais d'accessoires 1.

Le système de changement de vitesse 2 permet de modifier l'entraînement du groupe de lubrification GDL en fonction du régime de la turbomachine d'aéronef 100. La deuxième configuration C2, avec un rapport de transmission R2 plus élevé que celui R1 de la première configuration C1, est particulièrement adaptée pour le régime sous-ralenti de la turbomachine d'aéronef 100 afin de compenser la faible vitesse de l'arbre de turbomachine 200, 210. Ceci permet d'assurer un entraînement suffisant de la pompe du groupe de lubrification GDL, à un débit et une pression adaptés, afin d'éviter un risque d'endommagement de la turbomachine 100 comme dans l'art antérieur, notamment par grippage. Le régime sous-ralenti s'observe notamment lors du démarrage de la turbomachine d'aéronef 100 ou lorsque la turbomachine est en moulinet, i.e. lorsque la turbomachine 100 à l'arrêt et tourne à très faible vitesse sous le seul effet du vent, plus connu sous le terme anglais « windmilling ». Le régime sous-ralenti peut également être observé lors d'une maintenance de la turbomachine d'aéronef 100. La première configuration C1, avec un rapport de réduction R1 = 1, permet quant à elle un entraînement de la pompe du groupe de lubrification GDL identique à celui de l'art antérieur dans les régimes de la turbomachine 100 autres que le sous-ralenti.

Selon un aspect préféré de l'invention, le dispositif d'embrayage 10 est configuré pour accoupler et désaccoupler l'arbre d'entrée 3 et l'arbre de sortie 4 de manière automatique en fonction du différentiel de vitesse entre l'arbre d'entrée 3 et l'arbre de sortie 4. Plus précisément, le dispositif d'embrayage 10 est configuré pour désaccoupler de manière automatique l'arbre d'entrée 3 et l'arbre de sortie 4 lorsque la vitesse N4 de l'arbre de sortie 4 est supérieure à la vitesse N3 de l'arbre d'entrée 3. Une intervention humaine n'est avantageusement pas nécessaire. Le déplacement entre la position embrayée E et la position débrayée D du dispositif d'embrayage 10 est de préférence effectué par mécanisme mécanique déclenché directement par le différentiel de vitesse entre l'arbre d'entrée 3 et l'arbre de sortie 4. Le dispositif d'embrayage 10 présente avantageusement une structure simple et peu coûteuse, facile à intégrer qui est exempte d'élément de contrôle électrique ou électronique.

De préférence, le dispositif d'embrayage 10 se présente sous la forme d'une roue libre, préférentiellement de type survireur. La roue libre comprend une première bague solidaire de l'arbre d'entrée 3 et une deuxième bague solidaire de l'arbre de sortie 4 et montée en vis-à-vis de la première bague de manière coaxiale. La roue libre comprend un ou plusieurs éléments d'accouplement en rotation de la deuxième bague avec la première bague, de préférence par arcboutement, tels que des osselets ou des galets. Dans la position embrayée E, la deuxième bague est bloquée par rapport à la première bague. Dans la position débrayée D, la deuxième bague est en survirage par rapport à la première bague. L'arbre de sortie 4 tourne dans le même sens dans la position embrayée E et dans la position débrayée D. On ne décrit par davantage une roue libre de type survireur, qui est connue en soi de l'homme du métier.

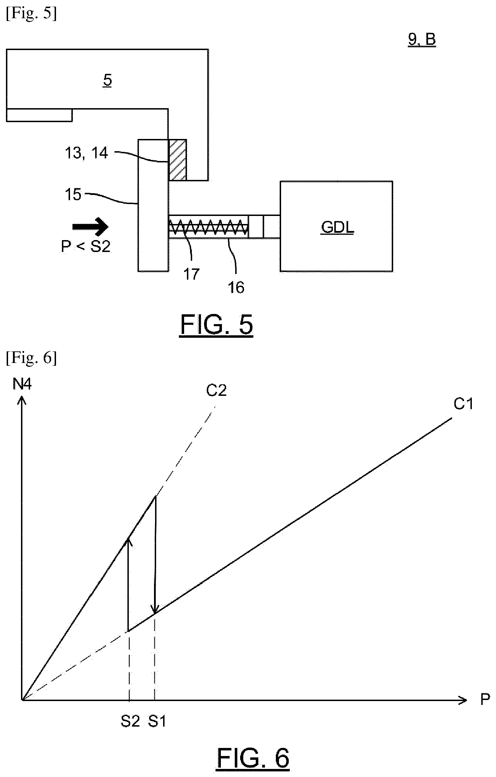

En référence aux figures 4 et 5 et comme décrit précédemment, le dispositif de blocage 9 comporte :
- Une position de déconnexion A illustrée sur la figure 4 dans laquelle le dispositif de blocage 9 autorise la rotation de la couronne 5 du train épicycloïdal, et
- Une position de connexion B illustrée sur la figure 5, dans laquelle le dispositif de blocage 9 empêche la rotation de la couronne 5 du train épicycloïdal.

Selon un aspect préféré illustré sur les figures 4 et 5, le dispositif de blocage 9 est configuré, dans la position de connexion B, pour coopérer avec la couronne 5 par embrayage, de préférence par liaison crabot. Le dispositif de blocage 9 comprend pour cela un organe de crabotage 15 comprenant des cannelures 13 configurées pour coopérer avec des cannelures complémentaires 14 sur la couronne 5, de manière à bloquer la rotation de la couronne 5.

Selon un aspect préféré illustré sur les figures 4 et 5, le dispositif de blocage 9 comprend un piston 16 monté mobile en translation entre la position de connexion B et la position de déconnexion A. L'organe de crabotage 15 est monté sur le piston 16 de manière à être déplacé entre la position de connexion B, dans laquelle les cannelures 13 coopèrent avec les cannelures complémentaires 14 de la couronne 5, et la position de déconnexion A, dans laquelle les cannelures 13 sont maintenues à distance des cannelures complémentaires 14 de la couronne 5. La couronne 5 est quant à elle montée fixe en translation.

De préférence, le piston 16 comprend de plus un ressort de rappel 17, dont la force de rappel permet de déplacer le piston 16 en synergie avec la pression P du fluide de lubrification.

Selon un aspect préféré illustré sur les figures 4 et 5, le déplacement du dispositif de blocage 9, et plus précisément du piston 16, est réalisé de manière automatique sous l'action de la pression P du fluide de lubrification circulant dans le groupe de lubrification GDL et du ressort de rappel 17. La pression P du fluide de lubrification varie en fonction du régime de la turbomachine d'aéronef 100, de manière croissante avec la vitesse N3 de l'arbre d'entrée 3.

En référence à la figure 6, la pression P du fluide de lubrification, lorsqu'elle est supérieure à un premier seuil S1, est configurée pour déplacer le dispositif de blocage 9 de la position de connexion B (figure 5) à la position de déconnexion A (figure 4). La pression P du fluide de lubrification permet également de charger le ressort de rappel 17. Dans la position de déconnexion A illustrée sur la figure 4, la pression P du fluide de lubrification est configurée pour agir sur le piston 16 de manière à maintenir l'organe de crabotage 15 à distance de la couronne 5. Toujours dans la position de déconnexion A illustrée sur la figure 4, la pression P du fluide de lubrification maintient le ressort 17 dans un état chargé.

Toujours en référence à la figure 6, lorsque la pression P du fluide de lubrification est inférieure à un deuxième seuil S2, le ressort de rappel 17 chargé exerce une force de rappel antagoniste et supérieure à la pression P qui permet de déplacer le dispositif de blocage 9 de la position de déconnexion A (figure 4) vers la position de connexion B (figure 5). Dans la position de connexion B illustrée sur la figure 5, la force de rappel du ressort 17 maintient les créneaux 13 de l'organe de crabotage 15 en coopération avec les créneaux 14 complémentaires de la couronne 5.

De préférence, le premier seuil S1 de pression P est choisi de sorte que la vitesse de l'arbre de turbomachine basse pression 200 soit supérieure à la vitesse maximale de moulinet, par exemple de l'ordre de 600tr/min, et inférieure à la vitesse moyenne de ralenti, par exemple de l'ordre de 10 000tr/min. De préférence, le deuxième seuil S2 de pression P est inférieur au premier seuil S1, une telle hystérésis étant générée par le système hydraulique du groupe de lubrification GDL et dépendant de la charge hydraulique. Une telle hystérésis permet un déplacement rapide de la première configuration C1 à la deuxième configuration C2 et inversement comme ce sera vu par la suite.

Aucune intervention humaine n'est ainsi requise pour déplacer le dispositif de blocage 9. Le déplacement automatique du dispositif de blocage 9 et du dispositif d'embrayage 10 permettent en synergie de passer de la première configuration C1 à la deuxième configuration C2 du système de changement de vitesse 2 de manière automatique, et inversement.

La figure 7 illustre un procédé d'utilisation du système de changement de vitesse 2 pour passer de la première configuration C1 à la deuxième configuration C2, par exemple lors d'une décélération de la turbomachine d'aéronef 100 vers le régime sous-ralenti. La turbomachine d'aéronef 100 est initialement dans un régime supérieur au régime sous-ralenti, par exemple en régime ralenti (« ground idle ») ou de croisière, et le fluide de lubrification circulant dans le groupe de lubrification GDL comporte une pression P supérieure au deuxième seuil S2. Le système de changement de vitesse 2 est initialement dans la première configuration C1. En pratique, l'arbre d'entrée 3, la couronne 5 et l'arbre de sortie 4 se déplacent ensemble suivant la même vitesse de rotation N3, N4.

En référence aux figures 6 et 7, le procédé comprend :
- Une étape de déplacement E1 du dispositif de blocage 9 dans la position de connexion B. L'étape de déplacement E1 est de préférence mise en œuvre de manière automatique lorsque la pression P du fluide de lubrification devient inférieure au deuxième seuil S2, de préférence grâce à la force de rappel du ressort 17 qui plaque l'organe de crabotage 15 contre la couronne 5. A la fin de l'étape de déplacement E1, la couronne 5 est bloquée en rotation, de préférence par liaison crabot. L'arbre d'entrée 3 se déplace alors dans la couronne 5 et entraîne l'arbre de sortie 4 à une vitesse N4 supérieure à la vitesse N3 de l'arbre d'entrée 3.
- Une étape de déplacement E2 du dispositif d'embrayage 10 dans la position débrayée D. De préférence, l'étape de déplacement E2 est mise en œuvre de manière automatique par survirage de la roue libre lorsque la vitesse N4 de l'arbre de sortie dépasse la vitesse N3 de l'arbre d'entrée 3 à la suite de l'étape de déplacement E1. L'étape de déplacement E1 entraîne l'étape de déplacement E2 de manière automatique et sans délai. A la fin de l'étape de déplacement E2, le système de changement de vitesse 2 est dans la deuxième configuration C2, ce qui offre des performances optimisées du groupe de lubrification GDL lors du régime sous-ralenti de la turbomachine d'aéronef 100.

La figure 8 illustre un procédé d'utilisation du système de changement de vitesse 2 pour passer de la deuxième configuration C2 à la première configuration C1, par exemple lors d'une augmentation de régime de la turbomachine d'aéronef 100 à partir du régime sous-ralenti. La turbomachine d'aéronef 100 est initialement dans un régime sous-ralenti et le fluide de lubrification circulant dans le groupe de lubrification GDL comporte une pression P inférieure au premier seuil S1. Le système de changement de vitesse 2 est initialement dans la deuxième configuration C2. En pratique, l'arbre de sortie 4 est entraîné à une vitesse N4 supérieure à la vitesse N3 de l'arbre d'entrée 3, la couronne 5 étant fixe.

En référence aux figures 6 et 8, le procédé comprend :
- Une étape de déplacement E3 du dispositif de blocage 9 dans la position de déconnexion A. L'étape de déplacement E3 est de préférence mise en œuvre de manière automatique lorsque la pression P du fluide de lubrification devient supérieure au premier seuil S1 et déplace le piston 16 pour éloigner l'organe de crabotage 15 de la couronne 5. A la fin de l'étape de déplacement E1, la couronne 5 est libre en rotation ce qui réduit la vitesse de l'arbre de sortie 4 par rapport à l'arbre d'entrée 3.
- Une étape de déplacement E4 du dispositif d'embrayage 10 dans la position embrayée E. De préférence, l'étape de déplacement E4 est mise en œuvre de manière automatique par blocage de la roue libre lorsque la vitesse N4 de l'arbre de sortie 4 est égale à la vitesse N3 de l'arbre d'entrée 3 à la suite de l'étape de déplacement E3. L'étape de déplacement E3 entraîne l'étape de déplacement E4 de manière automatique et sans délai. A la fin de l'étape de déplacement E4, le système de changement de vitesse 2 est dans la première configuration C1 et permet un fonctionnement de la pompe de lubrification similaire à celui de l'art antérieur en dehors du régime sous-ralenti de la turbomachine d'aéronef 100.

Ainsi, le déplacement du système de changement de vitesse 2 est entièrement contrôlé par le régime de la turbomachine d'aéronef, soit en fonction de la vitesse de l'arbre d'entrée N3, de manière automatique.

Selon un aspect alternatif de l'invention, le déplacement E2 du dispositif d'embrayage 10 dans la position débrayée D est mis en œuvre avant le déplacement E1 du dispositif de blocage 9 dans la position de déconnexion B, avec une constante de raideur du ressort de rappel 17 adaptée. De même, le déplacement E4 du dispositif d'embrayage 10 dans la position embrayée E est mis en œuvre avant le déplacement E3 du dispositif de blocage 9 dans la position de connexion A.

## Revendications

1. Boîtier de relais d'accessoires (1) pour une turbomachine d'aéronef (100) comprenant un système de changement de vitesse (2) comprenant un arbre d'entrée (3) et un arbre de sortie (4) configuré pour être entraîné en rotation par l'arbre d'entrée (3), ledit système de changement de vitesse (2) comprenant :
- un train d'engrenages épicycloïdal comprenant une couronne (5) montée libre en rotation, un planétaire (6) solidaire de l'arbre de sortie (4), et un porte-satellite (7) comprenant au moins un satellite (8), le porte-satellite (7) étant solidaire de l'arbre d'entrée (3),
- un dispositif d'embrayage (10) configuré, dans une position embrayée (E), pour coupler l'arbre d'entrée (3) et l'arbre de sortie (4), et dans une position débrayée (D), pour découpler l'arbre d'entrée (3) et l'arbre de sortie (4),
- un dispositif de blocage (9) configuré, dans une position de connexion (B), pour interdire la rotation de la couronne (5), et dans une position de déconnexion (A), pour autoriser la rotation de la couronne (5), le dispositif de blocage (9) comprenant un piston (16) mobile en translation entre la position de connexion (B) et la position de déconnexion (A),
- le système de changement de vitesse (2) comprenant :
- une première configuration (C1), dans laquelle le dispositif d'embrayage (10) est dans la position embrayée (E) et le dispositif de blocage (9) est dans la position de déconnexion (A), de manière à entraîner l'arbre de sortie (4) à une vitesse (N4) égale à la vitesse (N3) de l'arbre d'entrée (3), et
- une deuxième configuration (C2), dans laquelle le dispositif d'embrayage (10) est dans la position débrayée (D) et le dispositif de blocage (9) est dans la position de connexion (B), de manière à entraîner l'arbre de sortie (4) à une vitesse (N4) supérieure à la vitesse (N3) de l'arbre d'entrée (3),
- le boîtier de relais d'accessoires (1) étant **caractérisé en ce qu'**il comprend un groupe de lubrification (GDL) configuré pour être entraîné par le système de changement de vitesse (2), l'arbre de sortie (4) du système de changement de vitesse (2) étant relié à une partie rotative du groupe de lubrification (GDL), un fluide de lubrification circulant dans le groupe de lubrification (GDL) à une pression (P) variable en fonction du régime de l'arbre de sortie (4), le piston (16) du dispositif de blocage (9) étant muni d'un ressort de rappel et étant configuré pour être déplacé automatiquement de la position de connexion (B) à la position de déconnexion (A) sous l'action de la pression (P) du fluide de lubrification et du ressort de rappel (17), au-dessus d'un premier seuil (S1) de pression du fluide de lubrification (P) prédéterminé.

2. Boîtier de relais d'accessoires (1) selon la revendication 1, dans lequel le dispositif d'embrayage (10) est configuré pour désaccoupler de manière automatique l'arbre d'entrée (3) et l'arbre de sortie (4), lorsque la vitesse de rotation (N4) de l'arbre de sortie (4) est supérieure à la vitesse de rotation (N3) de l'arbre d'entrée (3).

3. Boîtier de relais d'accessoires (1) selon l'une des revendications 1 et 2, dans lequel le dispositif d'embrayage (10) se présente sous la forme d'une roue libre, de préférence de type survireur.

4. Boîtier de relais d'accessoires (1) selon l'une des revendications 1 à 3, dans lequel le dispositif de blocage (9), dans la position de connexion (B), coopère avec la couronne (5) par liaison crabot.

5. Boîtier de relais d'accessoires (1) selon l'une des revendications 1 à 4, dans lequel le piston (16) du dispositif de blocage (9) est configuré pour être déplacé automatiquement de la position de déconnexion (A) à la position de connexion (B) sous l'action de la pression (P) du fluide de lubrification et du ressort de rappel (17), lorsque la pression (P) du fluide de lubrification est inférieure à un deuxième seuil (S2) prédéterminé, de préférence inférieur au premier seuil (S1).

6. Procédé d'utilisation du boîtier de relais d'accessoires (1) selon l'une des revendications 1 à 5, dans lequel le système de changement de vitesse (2) est initialement dans la première configuration (C1), dans laquelle le dispositif d'embrayage (10) est dans la position embrayée (E) et le dispositif de blocage (9) est dans la position de déconnexion (A), le procédé d'utilisation comprenant :
- Une étape de déplacement (E1) du dispositif de blocage (9) dans la position de connexion (B) et
- Une étape de déplacement (E2) du dispositif d'embrayage (10) dans la position débrayée (D), de manière à ce que le système de changement de vitesse (2) soit dans la deuxième configuration (C2).

## Patentansprüche

1. Hilfsgetriebe (1) für ein Flugzeugturbinentriebwerk (100), umfassend ein Gangwechselsystem (2), das eine Antriebswelle (3) und eine Abtriebswelle (4) umfasst, die dazu konfiguriert ist, dass sie von der Antriebswelle (3) in Drehung versetzt wird, wobei das Gangwechselsystem (2) umfasst:
- ein Planetengetriebe, das einen frei drehbar gelagerten Zahnkranz (5), ein mit der Abtriebswelle (4) fest verbundenes Sonnenrad (6) und einen Planetenträger (7) umfasst, der mindestens ein Planetenrad (8) umfasst, wobei der Planetenträger (7) fest mit der Antriebswelle (3) verbunden ist,
- eine Kupplungsvorrichtung (10), die in einer eingekuppelten Position (E) dazu konfiguriert ist, die Antriebswelle (3) und die Abtriebswelle (4) zu koppeln, und in einer ausgekuppelten Position (D), die Antriebswelle (3) und die Abtriebswelle (4) zu entkoppeln,
- eine Sperrvorrichtung (9), die in einer eingerückten Position (B) dazu konfiguriert ist, die Drehung des Zahnkranzes (5) zu verhindern, und in einer ausgerückten Position (A), die Drehung des Zahnkranzes (5) zuzulassen, wobei die Sperrvorrichtung (9) einen Kolben (16) umfasst, der zwischen der eingerückten Position (B) und der ausgerückten Position (A) translatorisch bewegbar ist,
- wobei das Gangwechselsystem (2) umfasst:
- eine erste Konfiguration (C1), in der sich die Kupplungsvorrichtung (10) in der eingekuppelten Position (E) befindet und sich die Sperrvorrichtung (9) in der ausgerückten Position (A) befindet, um die Abtriebswelle (4) mit einer Drehgeschwindigkeit (N4) anzutreiben, die gleich der Drehgeschwindigkeit (N3) der Antriebswelle (3) ist, und
- eine zweite Konfiguration (C2), in der sich die Kupplungsvorrichtung (10) in der ausgekuppelten Position (D) befindet und sich die Sperrvorrichtung (9) in der eingerückten Position (B) befindet, um die Abtriebswelle (4) mit einer Drehgeschwindigkeit (N4) anzutreiben, die höher als die Drehgeschwindigkeit (N3) der Antriebswelle (3) ist,
- wobei das Hilfsgetriebe (1) **dadurch gekennzeichnet ist, dass** es eine Schmiereinheit (GDL) umfasst, die dazu konfiguriert ist, von dem Gangwechselsystem (2) angetrieben zu werden, wobei die Abtriebswelle (4) des Gangwechselsystems (2) mit einem drehenden Teil der Schmiereinheit (GDL) verbunden ist, wobei ein Schmierfluid in der Schmiereinheit (GDL) mit einem Druck (P) zirkuliert, der in Abhängigkeit von der Drehzahl der Abtriebswelle (4) schwankt, wobei der Kolben (16) der Sperrvorrichtung (9) mit einer Rückstellfeder versehen und dazu konfiguriert ist, unter der Wirkung des Drucks (P) des Schmierfluids und der Rückstellfeder (17) oberhalb eines vorbestimmten ersten Druckschwellenwerts (S1) des Schmierfluids (P) automatisch aus der eingerückten Position (B) in die ausgerückte Position (A) bewegt zu werden.

2. Hilfsgetriebe (1) nach Anspruch 1, wobei die Kupplungsvorrichtung (10) dazu konfiguriert ist, die Antriebswelle (3) und die Abtriebswelle (4) automatisch zu entkuppeln, wenn die Drehgeschwindigkeit (N4) der Abtriebswelle (4) größer als die Drehgeschwindigkeit (N3) der Antriebswelle (3) ist.

3. Hilfsgetriebe (1) nach einem der Ansprüche 1 und 2, wobei die Kupplungsvorrichtung (10) als Freilauf, vorzugsweise als Überholfreilauf, ausgebildet ist.

4. Hilfsgetriebe (1) nach einem der Ansprüche 1 bis 3, wobei die Sperrvorrichtung (9) in der eingerückten Position (B) über eine Klauenverbindung mit dem Zahnkranz (5) zusammenwirkt.

5. Hilfsgetriebe (1) nach einem der Ansprüche 1 bis 4, wobei der Kolben (16) der Sperrvorrichtung (9) dazu konfiguriert ist, unter der Wirkung des Drucks (P) des Schmierfluids und der Rückstellfeder (17) automatisch aus der ausgerückten Position (A) in die eingerückte Position (B) bewegt zu werden, wenn der Druck (P) des Schmierfluids unter einem zweiten vorgegebenen Schwellenwert (S2) liegt, der vorzugsweise unter dem ersten Schwellenwert (S1) liegt.

6. Verfahren zur Verwendung des Hilfsgetriebes (1) nach einem der Ansprüche 1 bis 5, wobei sich das Gangwechselsystem (2) anfänglich in der ersten Konfiguration (C1) befindet, in der sich die Kupplungsvorrichtung (10) in der eingekuppelten Position (E) und die Sperrvorrichtung (9) in der ausgerückten Position (A) befindet, wobei das Verfahren umfasst:
- einen Schritt (E1) des Bewegens der Sperrvorrichtung (9) in die eingerückte Position (B) und
- einen Schritt (E2) des Bewegens der Kupplungsvorrichtung (10) in die ausgekuppelte Position (D), so dass sich das Gangwechselsystem (2) in der zweiten Konfiguration (C2) befindet.

## Claims

1. An accessory gearbox (1) for an aircraft turbine engine (100) comprising a gear changing system (2) comprising an input shaft (3) and an output shaft (4) configured to be driven in rotation by the input shaft (3), said gear changing system (2) comprising:
- an epicyclic gear train comprising a ring gear (5) mounted to rotate freely, a sun gear (6) secured to the output shaft (4), and a planet carrier (7) comprising at least one planet gear (8), the planet carrier (7) being secured to the input shaft (3),
- a clutch device (10) configured, in an engaged position (E), to couple the input shaft (3) and the output shaft (4), and in a disengaged position (D), to uncouple the input shaft (3) and the output shaft (4),
- a locking device (9) configured, in a connected position (B), to prevent the rotation of the ring gear (5), and in a disconnected position (A), to allow the rotation of the ring gear (5), the locking device (9) comprising a piston (16) movable in translation between the connected position (B) and the disconnected position (A),
- the gear changing system (2) comprising:
- A first configuration (C1), wherein the clutch device (10) is in the engaged position (E) and the locking device (9) is in the disconnected position (A), so as to drive the output shaft (4) at a speed (N4) equal to the speed (N3) of the input shaft (3), and
- A second configuration (C2), wherein the clutch device (10) is in the disengaged position (D) and the locking device (9) is in the connected position (B), so as to drive the output shaft (4) at a speed (N4) greater than the speed (N3) of the input shaft (3),
- the accessory gearbox (1) being **characterized in that** it comprises a lubrification unit (GDL) configured to be driven by the gear changing system (2), the output shaft (4) of the gear changing system (2) being connected to a rotating lubrification unit (GDL), a lubricating fluid circulating in the lubrification unit (GDL) at a variable pression (P) as a function of the speed of the output shaft (4), the piston (16) of the locking device (9) being equipped with a return spring and being configured to be moved automatically from the connected position (B) to the disconnected position (A) under the action of the pressure (P) of the lubricating fluid and of the return spring (17), above the first pressure threshold (S1) of the predetermined lubricating fluid (P).

2. The accessory gearbox (1) according to claim 1, wherein the clutch device (10) is configured to automatically uncouple the input shaft (3) and the output shaft (4), when the rotational speed (N4) of the output shaft (4) is greater than the rotational speed (N3) of the input shaft (3).

3. The accessory gearbox (1) according to one of claims 1 and 2, wherein the clutch device (10) is in the form of a freewheel, preferably of the overrunning clutch type.

4. The accessory gearbox (1) according to one of claims 1 to 3, wherein the locking device (9), in the connected position (B), cooperate with the ring gear (5) by a positive-locking connection.

5. The accessory gearbox (1) according to one of claims 1 to 4, wherein the piston (16) of the locking device (9) is configured to be moved automatically from the disconnected position (A) to the connected position (B) under the action of the pressure (P) of the lubricating fluid and of the return spring (17) when the pressure (P) of the lubricating fluid is lower than a second predetermined threshold (S2), preferably lower than the first threshold (S1).

6. A method for using the accessory gearbox (1) according to one of claims 1 to 5, wherein the gear changing system (2) is initially in the first configuration (C1), wherein the clutch device (10) is in the engaged position (E) and the locking device (9) is in the disconnected position (A), the method of use comprising:
- A step (E1) of displacing the locking device (9) into the connected position (B) and
- A step (E2) of displacing the clutch device (10) to the disengaged position (D), so that the gear changing system (2) is in the second configuration (C2).
